# FASCICULE DE BREVET EUROPEEN

(11) **EP 2 551 222 B1**
(45) Date de publication et mention de la délivrance du brevet: **01.04.2015**
(21) Numéro de dépôt: 12305923.0
(22) Date de dépôt: 27.07.2012
(51) Int. Cl.: B65G 47/90, B65G 61/00, B65G 57/32, A21C 9/08

(54) **Procédé pour la manutention de produits, en particulier de tranches de denrées alimentaires**
Verfahren zur Beförderung von Produkten, insbesondere von Lebensmitteltranchen
Method for handling products, especially slices of food

(30) Priorité: 29.07.2011 FR 1157010
(43) Date de publication de la demande: 30.01.2013
(73) Titulaire: Vendée Concept, 85000 La Roche-Sur-Yon (FR)
(72) Inventeur: FAVRE, CHRISTOPHE, 85000 LA ROCHE-SUR-YON (FR)
(74) Mandataire: Coralis Harle

(56) Documents cités:
- EP-A1- 0 321 680
- EP-A1- 0 615 689
- WO-A1-2005/051812
- WO-A1-2006/088354
- WO-A1-2010/089150
- JP-A- 7 097 039
- NL-C2- 1 023 904
- US-A1- 2010 222 915

## Description

La présente invention concerne un procédé pour la manutention de produits, en particulier de denrées alimentaires en tranches, depuis un convoyeur d'amenée jusqu'à des moyens supports.

Dans certaines industries, notamment agroalimentaires, il est souvent nécessaire de transférer des produits depuis un convoyeur d'amenée, en particulier sous la forme d'une bande transporteuse d'amenée ou d'alimentation, jusqu'à des moyens supports de réception, également en forme de bande transporteuse ou de contenants de conditionnement.

Le document JP-7 097039 décrit une installation et un procédé pour la manutention de produits, selon le préambule de la revendication 1, qui comprend notamment un convoyeur d'amenée, des moyens de détection et un convoyeur de reprise.

Des moyens préhenseurs assurent la préhension des produits sur le convoyeur d'amenée, pour leur dépose sur le convoyeur de reprise.

Ces moyens préhenseurs comportent une bande préhenseur sans fin, qui s'enroule au niveau d'une extrémité avant et au niveau d'une extrémité arrière, et dont le plan supérieur constitue un plan de préhension pour les produits.

Cette bande préhenseur demeure en regard et au-dessus du convoyeur d'amenée, avec son extrémité avant s'étendant au niveau dudit convoyeur d'amenée et son extrémité arrière s'étendant au niveau du convoyeur de reprise.

En fonctionnement, cette bande préhenseur est manoeuvrable en oscillation autour de son extrémité arrière entre :
- une position basse, avec son extrémité avant qui s'étend à proximité du convoyeur d'amenée pour le prélèvement de produits au sein d'une barquette portée par ce convoyeur, et
- une position relevée, avec son extrémité avant qui s'étend à distance du convoyeur d'amenée pour le passage des barquettes.

Du fait de cette structure, la bande préhenseur chemine toujours dans un même sens, depuis le convoyeur d'amenée jusqu'au convoyeur de reprise, pour le transfert des produits de l'amont vers l'aval.

Ici, les moyens préhenseurs oscillants permettent simplement aux produits de changer de niveau (entre le convoyeur d'amenée et le convoyeur de reprise) ; ils ne permettent pas de transférer les produits à tout endroit environnant, dans toute direction et position.

On connait encore des moyens de transfert assurant la préhension individuelle des produits sur un convoyeur d'amenée, puis une dépose précise sur les moyens supports.

Cette manutention est traditionnellement réalisée à l'aide de moyens de préhension dédiés, à ouverture parallèle ou angulaire et à énergie pneumatique, portés par des moyens robotiques (voir par exemple le document WO-2005/051812).

Mais les moyens de préhension actuels de ces robots constituent souvent une source de détérioration pour les produits manipulés ; c'est en particulier le cas pour certains produits alimentaires qui sont fragiles et difficilement manipulables, tels que les tranches de viande ou de poisson.

Ces phénomènes sont ainsi susceptibles d'entrainer une dégradation de la présentation globale des produits manipulés, ainsi qu'une perte de matière mesurable.

De plus, les moyens de préhension à ouverture parallèle ou angulaire ne sont généralement pas aptes à manipuler des objets fins et fragiles, à savoir par exemple des tranches de viande dont l'épaisseur est comprise entre 5 et 10 mm.

Dans ce contexte, le déposant a développé une nouvelle structure d'installation pour la manutention de produits.

Le procédé conforme à l'invention est tout particulièrement adapté pour la préhension et la dépose de produits alimentaires fins et fragiles.

Ce procédé selon l'invention permet la manutention d'objets dans un espace tridimensionnel, d'un point géographique mobile à un autre point géographique mobile ou statique, à grande vitesse et avec précision, tout en respectant l'intégrité des produits. Le procédé selon l'invention est défini par les caractéristiques de la revendication 1.

L'installation est du type comprenant :
- un convoyeur d'amenée, définissant un plan de transport pour lesdits produits et une direction d'avancement,
- des moyens de détection, pour la détection de la position desdits produits sur ledit plan de transport,
- des moyens supports, pour la réception desdits produits,
- des moyens préhenseurs, portés par des moyens de manoeuvre, pour assurer la préhension desdits produits sur ledit plan de transport et pour assurer leur dépose sur lesdits moyens supports, lesquels moyens préhenseurs comportent une bande préhenseur, sans fin, qui s'enroule au niveau d'une première extrémité, dite extrémité avant, autour d'un tambour d'extrémité avant, et au niveau d'une seconde extrémité, dite extrémité arrière, autour d'un tambour d'extrémité arrière, l'un au moins desdits tambours étant associé à une motorisation pilotée par lesdits moyens de commande, laquelle bande préhenseur comporte un brin supérieur présentant une face de dessus constituant un plan de préhension pour lesdits produits, et
- des moyens pour la commande desdits moyens de manoeuvre et desdits moyens préhenseurs, à partir des informations fournies au moins par lesdits moyens de détection.

Et conformément à la présente invention, lesdits moyens de manoeuvre sont aptes à assurer une manoeuvre desdits moyens préhenseurs dans un espace tridimensionnel, entre deux positions :
- une position de préhension, dans laquelle ladite bande préhenseur est positionnée en regard et au-dessus dudit convoyeur d'amenée, pour la préhension des produits, et
- une position de dépose, dans laquelle ladite bande préhenseur est positionnée en regard et au-dessus desdits moyens supports, pour la dépose des produits.

En outre, la motorisation des moyens préhenseurs est apte à assurer la mise en rotation du tambour associé dans les deux sens, pour permettre le cheminement du plan de préhension de la bande préhenseur dans deux sens inverses de cheminement, en vue de la préhension et de la dépose des produits par l'extrémité avant de ladite bande préhenseur.

D'autres caractéristiques avantageuses, pouvant être prises en combinaison ou indépendamment les unes des autres, sont précisées ci-dessous :
- les moyens de manoeuvre assurent une manoeuvre des moyens préhenseurs selon : - un axe de translation horizontal latéral, orienté perpendiculairement à la direction d'avancement du convoyeur d'amenée, - un axe de translation horizontal « amont - aval », orienté parallèlement à la direction d'avancement du convoyeur d'amenée, - un axe de translation orienté verticalement, pour un déplacement en hauteur des moyens préhenseurs associés, notamment par rapport au plan de transport du convoyeur d'amenée et par rapport aux moyens supports, et - un axe de rotation vertical, de sorte à contrôler les mouvements de pivotement de l'axe de cheminement du convoyeur préhenseur.
- les moyens de manoeuvre consistent en un robot, de préférence en un robot à bras parallèles, encore de préférence en un bras robot, et encore de préférence en un robot dit « delta » dont l'organe de manipulation est formé de trois parallélogrammes déformables.

- la motorisation des moyens préhenseurs coopère avec des moyens capteurs de vitesse et de position, raccordés aux moyens de commande, pour contrôler le cheminement du plan de préhension de la bande préhenseur et aussi du produit lors de sa préhension et de sa dépose ;
- selon l'invention, le diamètre du tambour d'extrémité avant de la bande préhenseur est inférieur au diamètre du tambour d'extrémité arrière ;
- selon l'invention, le plan de préhension défini par le brin supérieur de la bande préhenseur est incliné par rapport à l'horizontale, en particulier lors des manoeuvres de préhension des produits sur le convoyeur d'amenée et de dépose de ce produit sur les moyens supports ; dans ce cas, ledit plan de préhension est avantageusement incliné par rapport à l'horizontale, d'un angle compris entre 10° et 45° lors des manoeuvres de préhension des produits sur le convoyeur d'amenée, et de dépose de ces produits sur les moyens supports ;
- le convoyeur d'amenée des produits comporte un tambour d'entrainement couplé à une motorisation munie de moyens capteurs de vitesse et de position qui sont raccordés également aux moyens de commande ;
- les moyens de détection du positionnement des produits sur le convoyeur d'amenée consistent en des moyens d'acquisition d'image(s) ; et les moyens de commande comportent des moyens de traitement d'image(s) et des moyens de suivi des produits, pour piloter les moyens préhenseurs et les moyens de manoeuvre associés ;
- les moyens supports pour la réception des produits consistent en des conditionnements ;
- les moyens de commande intègrent également des moyens ou modules pour ajuster au moins la vitesse de cheminement de la bande préhenseur permettant, lors des manoeuvres de préhension du produit sur le convoyeur d'amenée et/ou lors des manoeuvres de dépose des produits sur les moyens supports, l'application d'une différence de vitesse entre, d'une part, ledit convoyeur d'amenée ou lesdits moyens supports, selon le cas, et d'autre part, le plan de préhension de la bande préhenseur, de manière à assurer une extension ou une rétraction de la longueur des produits.

Le procédé de fonctionnement de l'installation précitée, est utilisé pour la manutention de produits rétractables/extensibles, du type tranches de viande ou de poisson.

Ce procédé est caractérisé par le fait qu'il consiste, lors des manoeuvres de préhension dudit produit sur ledit convoyeur d'amenée et/ou de dépose des produits sur les moyens supports, à appliquer une différence de vitesse de cheminement entre, d'une part, ledit convoyeur d'amenée ou lesdits moyens supports, selon le cas, et d'autre part, le plan de préhension de la bande préhenseur, de manière à assurer une extension ou une rétraction de la longueur des produits.

L'invention sera encore illustrée, sans être aucunement limitée, par la description suivante en relation avec les dessins annexés dans lesquels :
- la Figure 1 est une vue générale, et en perspective, d'une installation de manutention selon l'invention ;
- la Figure 2 est une vue de détail, et agrandie, des moyens préhenseurs équipant l'installation de manutention selon la Figure 1 ;
- la Figure 3 représente les moyens préhenseurs de la Figure 2, vus de côté ;
- les Figures 4 à 6 représentent très schématiquement les principales étapes de cinématique pour la préhension, par les moyens préhenseurs de l'invention, d'un produit transporté par le convoyeur d'amenée ;
- la Figure 7 est une représentation schématique illustrant la dépose du produit manutentionné sur un conditionnement de réception.

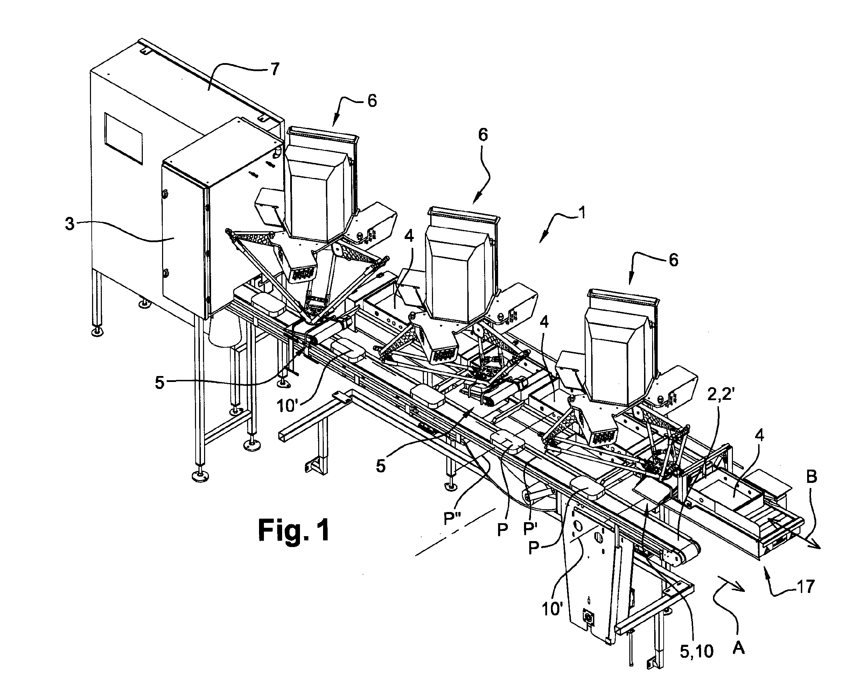

L'installation de manutention 1, représentée sur la Figure 1, est destinée en particulier à l'industrie agroalimentaire, pour la manipulation de produits du type denrées alimentaires.

Les produits sont représentés schématiquement sur la Figure 1, sous la forme de parallélépipèdes, où ils sont désignés par le repère P.

Ces produits P présentent avantageusement une forme générale allongée, avec un axe longitudinal de symétrie P' et un axe transversal de symétrie P".

En pratique, ces produits P consistent par exemple en des morceaux de viande, et de préférence des tranches de viande présentant une épaisseur comprise entre 5 et 10 mm.

Pour la manutention de ces produits P, l'installation 1 comprend :
- un convoyeur d'amenée 2 consistant ici en une bande transporteuse dite « d'amenée » ou « d'alimentation », dont le brin supérieur 2' définit un plan de transport (ci-après également désigné par le repère 2') pour les produits P,
- des moyens de détection 3, permettant la détection de la position de chaque produit P rapporté sur le plan de transport 2',
- des moyens supports 4, pour la réception desdits produits P prélevés sur le convoyeur d'amenée 2,
- des moyens préhenseurs 5, pour la préhension desdits produits P sur ledit plan de transport 2' et leur dépose sur lesdits moyens supports 4,
- des moyens de manoeuvre 6, consistant ici en des moyens robotiques 6 qui sont couplés aux moyens préhenseurs 5 pour la manoeuvre de ces derniers dans l'espace (et en particulier dans les trois dimensions), entre (i) une position de préhension d'un produit P sur ledit plan de transport 2', et (ii) une position de dépose du produit P manutentionné sur lesdits moyens supports 4, et
- des moyens de commande 7, pour le pilotage desdits moyens préhenseurs 5 et desdits moyens robotiques 6.

A titre préliminaire, et de manière générale, le plan de transport 2' du convoyeur d'alimentation 2 chemine toujours selon un même sens illustré par la flèche A (de la gauche vers la droite sur les Figures 1 à 6), pour le convoyage des produits P depuis l'amont vers l'aval.

L'installation de manutention 1 est ici équipée de trois moyens préhenseurs 5 identiques, qui sont disposés en série sur la longueur du plan de transport 2' et qui sont chacun associés à leurs propres moyens robotiques 6.

De manière générale, sur la longueur du convoyeur d'amenée 2, le nombre de moyens préhenseurs 5 est adapté notamment en fonction de la cadence d'alimentation en produits P et de la vitesse des moyens robotiques 6.

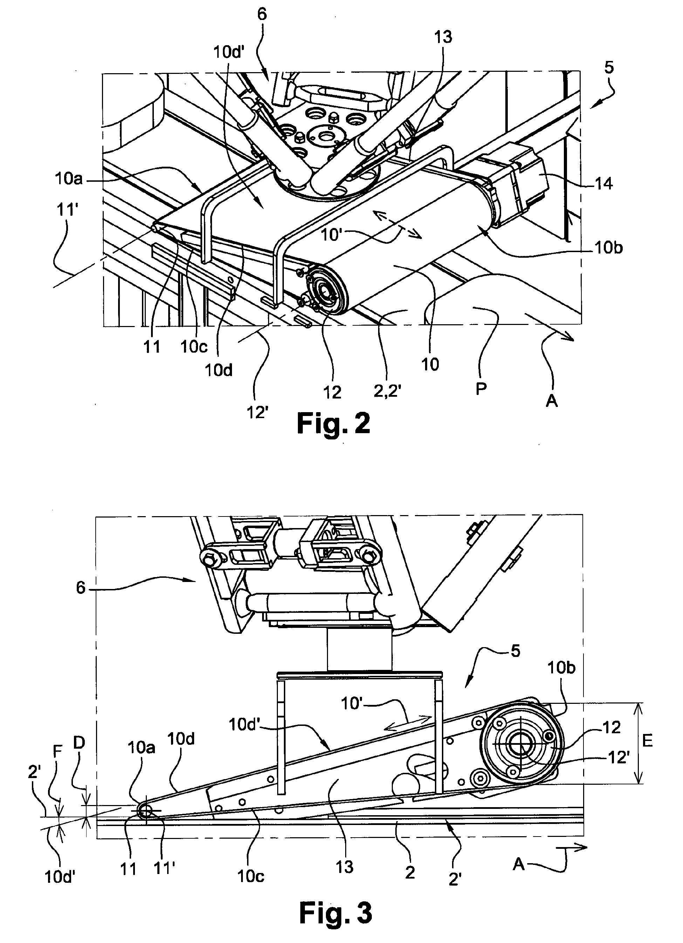

La structure de l'un de ces moyens préhenseurs 5 est représentée sur les Figures 2 et 3.

Les moyens préhenseurs 5 correspondants consistent en un convoyeur qui comporte une bande transporteuse 10, sans fin, dénommée ci-après indifféremment « bande préhenseur » ou « convoyeur préhenseur ».

La bande préhenseur 10 est destinée à prélever au moins un produit P sur le plan de travail 2' en mouvement, puis à déposer ce produit P dans les moyens supports 4.

Pour cela, cette bande préhenseur 10 est portée par deux tambours, en regard et à distance l'un de l'autre, pour définir deux extrémités de cette bande 10 :
- une première extrémité 10a, dite « extrémité avant », s'enroulant autour d'un tambour d'extrémité avant 11, et
- une seconde extrémité 10b, dite « extrémité arrière », s'enroulant autour d'un tambour d'extrémité arrière 12.

La bande préhenseur 10, s'étendant entre ces deux tambours d'extrémité 11 et 12, présente ainsi deux brins :
- un brin inférieur 10c, destiné à venir en regard de la bande transporteuse d'amenée 2 et des moyens supports 4, et
- un brin supérieur 10d dont la face de dessus 10d' constitue un plan de préhension et de réception (désigné ci-après par ce même repère 10d') pour lesdits produits P.

Cette bande préhenseur 10 est avantageusement réalisée en polyuréthane.

Elle présente avantageusement une épaisseur constance, par exemple comprise entre 0,1 mm et 4 mm, de préférence entre 0,1 et 2 mm, de préférence encore 0,1 et 1 mm.

Les deux tambours d'extrémité 11 et 12 sont portés par deux platines supports latérales 13 qui sont elles-mêmes assemblées sur les moyens robotiques 6.

Seule la platine support 13 située en arrière plan sur les Figures 2 et 3 est ici représentée (la platine support en premier plan n'est pas représentée), de manière à permettre un accès visuel direct aux deux tambours d'extrémité 11 et 12 précités.

Les tambours d'extrémité 11 et 12 ont chacun une forme générale de cylindre circulaire droit, et ils comportent chacun un axe de rotation désignés, respectivement, par des repères 11' et 12'.

Les axes de rotation 11' et 12' de ces tambours d'extrémité 11 et 12 s'étendent parallèlement et à distance l'un de l'autre.

Ce convoyeur préhenseur 10 se présente sous la forme d'un convoyeur du type « sabre ».

Pour cela, le diamètre D du tambour d'extrémité avant 11 est ici très petit et nettement inférieur au diamètre E du tambour d'extrémité arrière 12 (Figure 3).
Cette caractéristique vise à conférer un rayon minimal d'enroulement à la bande préhenseur 10, au niveau de son extrémité avant 10a, principalement pour optimiser la prise en charge des produits P reposant sur le plan de transport 2'.

Uniquement à titre d'exemple, le diamètre D du tambour d'extrémité avant 11 est avantageusement compris entre 6 mm et 15 mm ; le diamètre E du tambour d'extrémité arrière 12 est compris entre 30 mm et 60 mm.
La distance entre les axes de rotation 11' et 12' de ces tambours d'extrémité 11 et 12 est par exemple comprise entre 200 mm et 400 mm.
L'épaisseur de l'extrémité avant 10a de la bande préhenseur 10, entourant le tambour d'extrémité avant 11, est avantageusement comprise entre 6 mm et 15 mm.

Le brin supérieur 10d de la bande préhenseur 10, et son plan de préhension 10d', sont inclinés par rapport à l'horizontale, selon une pente descendante depuis son extrémité arrière 10b jusqu'à son extrémité avant 10a.
Cette inclinaison est appliquée en particulier lors des manoeuvres de préhension du produit P sur la bande transporteuse d'amenée 2, et des manoeuvres de dépose du produit P manutentionné sur les moyens supports 4.

De préférence, le plan de préhension 10d' est incliné par rapport au plan de transport 2', ici à l'horizontale, selon un angle F avantageusement compris entre 10° et 45° (figure 3).
Selon une variante de réalisation, le plan de préhension 10d' peut encore former un angle inférieur à 10°, par exemple compris entre 1 ° et 9°.

En outre, ces deux tambours d'extrémité 11 et 12 définissent l'axe ou la direction de cheminement 10' du brin supérieur 10d du convoyeur préhenseur 10, et de son plan de préhension 10d'.

Cet axe de cheminement 10' s'étend perpendiculairement aux axes de rotation 11' et 12' des deux tambours d'extrémité 11 et 12, et il s'étend parallèlement au plan de préhension 10d'.

Le brin supérieur 10d de la bande préhenseur 10 est manoeuvré en translation par une motorisation 14 coopérant avec le tambour d'extrémité arrière 12, formant tambour d'entrainement (visible sur la Figure 2).

Uniquement à titre indicatif, la motorisation 14 consiste en un moteur asynchrone triphasé, ou en un moteur synchrone sans balais (dit « brushless »).

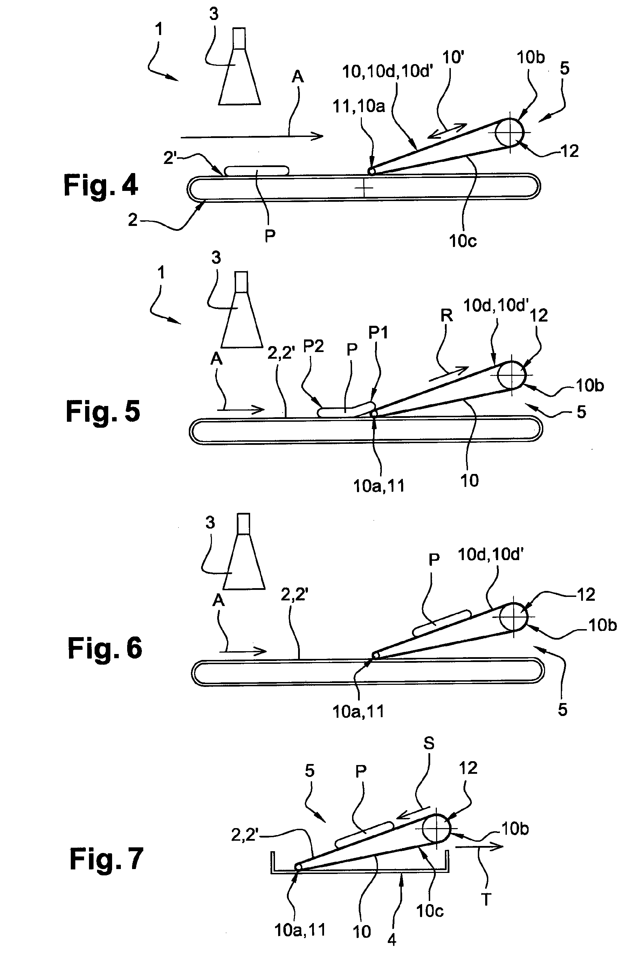

La motorisation 14 est pilotée par les moyens de commande 7 pour entrainer le tambour d'extrémité arrière 12 dans les deux sens de rotation, et en corolaire pour assurer le cheminement du brin supérieur 10d de la bande préhenseur 10 dans deux sens inverses de cheminement (décrits par la suite en relation avec les Figures 4 à 7). Comme développé ci-après en relation avec les figures 4 à 7, cette caractéristique est utile pour la préhension et pour la dépose des produits P au niveau de la même extrémité avant 10a de la bande préhenseur 10.

La motorisation 14 des moyens préhenseurs 5 comporte encore des moyens capteurs de vitesse et de position (non visibles), raccordés aux moyens de commande 7.

Ces moyens capteurs de vitesse et de position interviennent dans le contrôle du cheminement du brin supérieur 10d de la bande préhenseur 10, et par conséquent du déplacement du produit P sur le plan de préhension 10d' notamment lors de sa préhension et de sa dépose.

Ces moyens capteurs de vitesse et de position consistent avantageusement en un codeur rotatif (de préférence incrémental).

Les moyens préhenseurs 5 sont manoeuvrés par les moyens robotiques 6 associés.

Ces moyens robotiques 6 sont suspendus au-dessus de la bande transporteuse d'amenée 2 et des moyens supports 4.

Les moyens robotiques 6 permettent la manipulation des moyens préhenseurs 5, et en particulier de son convoyeur préhenseur 10, dans un espace tridimensionnel s'étendant au-dessus du convoyeur transporteur d'amenée 2 et des moyens 4 de réception des produits P, cela à grande vitesse et avec précision.

Ces moyens robotiques 6 consistent avantageusement en un robot qui est choisi en fonction des cadences souhaitées, de son champ d'accessibilité et de sa précision.

Ce robot 6 est avantageusement choisi parmi les robots à bras parallèles. De préférence il est encore choisi parmi les bras robotiques ou bras robots, et avantageusement encore parmi les robots dits « Delta » (dont l'organe de manipulation est formé de trois parallélogrammes déformables).

Ce robot 6 est choisi de sorte à assurer une manoeuvre du convoyeur préhenseur 10 associé selon trois axes de translation (en x, y et z), à savoir :
- un axe de translation horizontal « amont - aval », orienté parallèlement à la direction d'avancement A du convoyeur d'amenée 2,
- un axe de translation horizontal latéral, orienté perpendiculairement à la direction d'avancement A du convoyeur d'amenée 2 (tel qu'illustré par les moyens préhenseurs 5 associés au robot 6 en position intermédiaire sur la Figure 1),
- un axe de translation orienté verticalement, pour un déplacement en hauteur des moyens préhenseurs 5 associés notamment par rapport au plan de transport 2' du convoyeur d'amenée 2 et par rapport aux moyens supports 4.

Ce robot 6 autorise aussi avantageusement un déplacement des moyens préhenseurs 5 également autour d'un axe de rotation vertical (dit encore mouvement de « lacet »), de sorte à contrôler les mouvements de pivotement du convoyeur préhenseur 10 constitutif et de son axe de cheminement 10' (tel qu'illustré par les moyens préhenseurs 5 associés au robot 6 en position aval sur la Figure 1).
Cette dernière caractéristique est en particulier utile pour assurer une dépose optimale des produits P sur les moyens supports 4, quel que soit l'orientation desdits produits P lors de leur préhension par le convoyeur préhenseur 10 sur le plan de transport 2'.

Pour être complet, des capteurs de présence peuvent être ajoutés pour contrôler la présence effective d'un produit P sur la bande préhenseur 10.

La bande transporteuse d'amenée 2 consiste ici en une bande sans fin associée à un tambour motorisé (non représenté), pour le cheminement de son plan de transport 2' à une vitesse continue dans le sens de cheminement A précité.

La motorisation (non représentée), équipant ce tambour d'entrainement, est munie de moyens capteurs de vitesse et de position qui sont identiques à ceux associés à la motorisation 14 des moyens préhenseurs 5.

Là encore, ces moyens capteurs de vitesse et de position sont raccordés aux moyens de commande 7.

Les moyens de détection 3 sont implantés en amont des moyens préhenseurs 5, tenant compte du sens de cheminement A du plan de transport 2'.

Lorsque les produits P à manipuler sont alignés dans le sens de marche A du convoyeur d'amenée 2, ces moyens de détection 3 peuvent consister en un capteur de proximité ou de présence, par exemple un dispositif optoélectronique, notamment un simple dispositif barrière.
Ce dispositif de détection barrière consiste par exemple en une cellule photoélectrique, pour détecter la position des produits P sur le convoyeur d'amenée 2 et pour permettre aux moyens préhenseurs 5 de les repérer en tenant compte du cheminement du convoyeur d'amenée 2 comme il est d'usage dans les processus de suivi automatique d'objets (ou technique dite de « tracking »).

Lorsque les produits P à prélever ne sont pas alignés sur le plan de transport 2' et présentent un axe longitudinal P' orienté aléatoirement, les moyens de détection 3 consistent avantageusement en des moyens d'acquisition d'image(s), de préférence des moyens vidéo (par exemple une caméra), placés au-dessus du convoyeur d'amenée 2.
Ces moyens vidéo permettent, d'une part, de saisir simultanément la position et l'orientation de chaque produit P sur le convoyeur d'amenée 2 et, d'autre part, aux moyens préhenseurs 5 de les repérer en tenant compte du cheminement du convoyeur d'amenée 2, comme il est d'usage dans les processus de suivi automatique d'objets.

Les moyens supports 4, destinés à recevoir les produits P, consistent ici en des barquettes de conditionnement.

Ces barquettes 4 sont avantageusement portées par un convoyeur 17, pour leur transport selon un sens B qui peut être identique, inverse, perpendiculaire, ou autre, au sens de cheminement A du plan de transport 2' de la bande convoyeuse d'amenée 2 (figure 1).

Le second convoyeur 17 reçoit les contenants 4, avantageusement pour denrées alimentaires, qui sont initialement vides, puis il évacue ces contenants 4 lorsqu'ils sont pleins.

De manière alternative, les moyens supports 4 peuvent également consister en une bande transporteuse sans fin dont le brin de réception chemine en continu, ou en discontinu.

Le cas échéant, les moyens de commande 7 comportent un automate programmable, ou un calculateur, configuré pour le pilotage de la partie opérative de l'installation 1, en particulier les moyens préhenseurs 5 et les moyens robotiques 6.

Les moyens de commande 7 intègrent des moyens ou modules de traitement d'image(s) qui sont raccordés aux moyens d'acquisition d'image(s) 3, pour l'analyse des images acquises.

Ces moyens de traitement d'image(s) consistent avantageusement en un programme informatique pour la mise en oeuvre d'un algorithme adapté, permettant une détermination de la position, et le cas échéant de l'orientation, de chaque produit P sur le convoyeur d'amenée 2.

Par « orientation » d'un produit P, on entend en particulier l'angle formé entre son axe longitudinal P' et l'axe de cheminement A du plan de transport 2'.

Les moyens de commande 7 intègrent également des moyens ou modules de suivi d'objets, dits encore moyens ou modules de « tracking », également avantageusement sous la forme d'un programme informatique pour la mise en oeuvre d'un algorithme adapté.

Les moyens de suivi d'objet interviennent dans le pilotage des moyens robotiques 6 et des moyens préhenseurs 5, de sorte que les moyens préhenseurs 5 transfèrent chaque produit P depuis le plan de transport 2' jusqu'aux moyens supports 4.

Pour cela, les moyens de suivi d'objets tiennent compte notamment des données fournies par les moyens de détection 3, par les moyens capteurs de vitesse et de position portés par la motorisation 14 des moyens préhenseur 5, et par les moyens capteurs de vitesse et de position associés à la bande transporteuse d'amenée 2.

Dans le cas où les moyens supports 4 sont en mouvement, ils sont avantageusement associés également à des moyens capteurs de vitesse et de position ; les moyens de suivi d'objets tiennent compte également des données fournies par ces derniers moyens capteurs de vitesse et de position.

Les moyens de commande 7 intègrent également avantageusement des moyens ou modules pour ajuster au moins la vitesse de cheminement du convoyeur préhenseur 10 permettant, lors des manoeuvres de préhension des produits P sur le convoyeur d'amenée 2 et/ou des manoeuvres de dépose des produits P sur les moyens supports 4, l'application d'une différence de vitesse entre, d'une part, ledit convoyeur d'amenée 2 ou lesdits moyens supports 4, selon le cas, et d'autre part, le plan de préhension 10d' de la bande préhenseur 10, de manière à assurer une extension ou une rétraction de la longueur des produits P.

Le fonctionnement de cette installation de manutention 1 est détaillé ci-dessous en relation avec les Figures 4 à 7, dans le cadre des opérations de préhension et de pose d'un unique produit P.
Les repères employés pour désigner les différents éléments structurels sur les Figures 1 à 3 sont conservés dans le cadre de la description de ces Figures 4 à 7, par souci de simplification.

Ainsi, sur ces Figures 4 à 7, on retrouve : - la bande transporteuse d'amenée 2 sur laquelle est positionné à l'origine un produit P, - la bande préhenseur 10 portée par les tambours d'extrémité 11 et 12, et - les moyens de détection 3. Les moyens robotiques 6 et les moyens de commande 7 ne sont ici pas représentés uniquement dans un souci de simplification.

En fonctionnement, la bande transporteuse d'amenée 2 chemine en continu selon un même sens illustré par la flèche A (de la gauche vers la droite sur les Figures 4 à 6), pour le convoyage des produits P en continu de l'amont vers l'aval.

Les produits P sont rapportés en amont de cette bande transporteuse d'amenée 2, avantageusement d'une manière individualisée les uns par rapport aux autres et avec un intervalle de séparation sur la longueur de son plan de transport 2' (comme illustré en particulier sur la Figure 1).
Par exemple, les produits P rapportés sur la bande transporteuse d'amenée 2 proviennent d'une trancheuse automatique de denrées, par exemple une trancheuse automatique de morceaux de viande ou de poisson.

En amont, les produits P cheminent tout d'abord dans le champ de capture des moyens vidéo 3.

Les images capturées sont transmises aux moyens de commande 7, pour être analysées par les moyens de traitement d'image(s) de manière à déterminer la position, et le cas échéant l'orientation, de chaque produit P sur le plan de transport 2' de la bande transporteuse d'amenée 2.

Pour la préhension d'un produit P déterminé sur le plan de transport 2', les moyens de suivi d'objet intégrés dans les moyens de commande 7 pilotent alors un robot 6 de sorte que les moyens préhenseurs 5 associés soient manoeuvrés en position de préhension, tenant compte des données issues du traitement des images acquises par les moyens vidéo 3 et aussi des données émises par les moyens capteurs de vitesse et de position associés à la bande transporteuse d'amenée 2.

En pratique, le convoyeur préhenseur 10 est positionné en regard et au-dessus de cette bande transporteuse d'amenée 2, de sorte que son brin inférieur 10c s'étende en regard du plan de transport 2'.

Ce convoyeur préhenseur 10 est positionné également de sorte que son extrémité avant 10a s'étende au plus près de ce plan de transport 2'.
A titre indicatif, la distance ou hauteur entre cette extrémité avant 10a et le plan de transport 2' est avantageusement comprise entre 1 et 2 mm.

De plus, comme évoqué précédemment, le plan de préhension 10d' de ce convoyeur préhenseur 10 forme avantageusement un angle compris entre 10° et 45° par rapport au plan de transport 2'.

En outre, le robot 6 associé est piloté de sorte que l'axe de cheminement 10' de ce convoyeur préhenseur 10 et le sens de cheminement A du plan de transport 2' s'étendent, au moins approximativement, dans un même plan vertical.
Dans ce cas, l'extrémité avant 10a du convoyeur préhenseur 10 s'étend perpendiculairement à ce sens de cheminement A du plan de transport 2'.

L'extrémité avant 10a du convoyeur préhenseur 10 est de plus positionnée juste en aval du produit P à prendre à charge.
Le convoyeur préhenseur 10 est alors figé dans cette position, sans déplacement en translation ; de manière alternative à cette prise en charge statique, le convoyeur préhenseur peut avantageusement progresser vers le produit pour prendre en charge de ce dernier, selon un sens de cheminement horizontal dans un sens aval vers amont. Le cheminement du plan de transport 2' permet l'amenée du produit P jusqu'à ce convoyeur préhenseur 10 en position de préhension.

Lorsque le produit P atteint l'extrémité avant 10a du convoyeur préhenseur 10, les moyens de suivi d'objet équipant les moyens de commande 7 pilotent la motorisation 14 des moyens préhenseurs 5 de sorte à provoquer le cheminement de son plan de préhension 10d' dans un sens avant - arrière (de l'extrémité avant 10a vers l'extrémité arrière 10b) symbolisé par la flèche R sur la Figure 5.

Le sens de cheminement R du plan de préhension 10d' s'étend approximativement dans la continuité du sens de cheminement A du plan de transport 2'.

De plus, la vitesse de cheminement du plan de préhension 10d' est identique, ou au moins approximativement identique, à la vitesse de cheminement du plan de transport 2'.

Le produit P est alors transféré progressivement depuis le plan de transport 2' jusqu'au plan de préhension 10d' du fait de la force de frottement exercée par ce dernier.
Lors de cette préhension, une partie aval P1 du produit P (croissante) repose ainsi sur le plan de préhension 10d' et une partie amont P2 du même produit P (décroissante) repose sur le plan de transport 2'.
Le plan de préhension 10d' et le plan de transport 2' constituent ainsi ensemble une sorte de plan de convoyage du produit de l'amont vers l'aval.

Les moyens de suivi d'objet conduisent le cheminement du plan de préhension 10d' jusqu'à ce que le produit P repose entièrement sur ce dernier (Figure 6).

Le plan de préhension 10d' du convoyeur préhenseur 10 est alors immobilisé en cheminement, et les moyens préhenseurs 5 sont écartés de la bande transporteuse d'amenée 2 puis positionnés au-dessus de l'un des moyens supports 4 (Figure 7). Cette manoeuvre des moyens préhenseurs 5 est assurée par le robot 6 associé, au moyen de mouvements en translation dans l'espace décrits précédemment, en particulier par une translation horizontale latérale.

Le convoyeur préhenseur 10 atteint ainsi une position dite de « dépose », dans laquelle il est positionné en regard et au-dessus des moyens supports 4, de sorte que son brin inférieur 10c s'étende en regard de ces derniers.

Ce convoyeur préhenseur 10 est également ajusté en hauteur de sorte que son extrémité avant 10a s'étende au plus près de ces moyens supports 4.
A titre indicatif, la distance ou hauteur entre cette extrémité avant 10a et les moyens supports 4 est avantageusement comprise entre 1 mm et 30 mm.

De plus, comme évoqué précédemment, le plan de préhension 10d' de ce convoyeur préhenseur 10 forme avantageusement un angle compris entre 10° et 45° par rapport aux moyens supports 4.

Pour la dépose du produit P manipulé, les moyens de commande 7 provoquent maintenant le déplacement du plan de préhension 10d' dans le sens arrière - avant (de l'extrémité arrière 10b vers l'extrémité avant 10a), tel qu'illustré schématiquement par la flèche S sur la Figure 7.

Ce cheminement arrière - avant du plan de préhension 10d' est combiné avec une manoeuvre en translation du convoyeur préhenseur 10 dans un sens avant vers arrière illustré par la flèche T sur la Figure 7, conférant une vitesse relative aux moyens supports 4 en regard.
Ce mouvement de translation du convoyeur préhenseur 10 peut être combiné avec, ou remplacé par, un mouvement de translation des moyens supports 4.
Cette combinaison de mouvements, pilotée par les moyens de commande 7, permet la dépose progressive du produit P à plat sur les moyens supports 4, avantageusement dans une orientation identique à celle présente à l'origine sur la plan de transport 2'.

Lors de cette dépose du produit P manutentionné et si l'axe longitudinal P' du produit P n'est pas convenablement aligné avec l'axe de cheminement 10' du convoyeur préhenseur 10 (en particulier dans le cas d'une orientation initiale aléatoire des produits P sur le plan de transport 2'), ce dernier peut être également convenablement manoeuvré en pivotement autour de l'axe de rotation vertical précité (mouvement de lacet).

Là encore, les mouvements en translation et en rotation du convoyeur préhenseur 10 sont assurés par les moyens robotiques 6 associés, qui sont convenablement pilotés par les moyens de suivi d'objet équipant les moyens de commande 7, de sorte à obtenir l'orientation finale souhaitée de ce produit P dans les moyens supports 4.

Lors des manoeuvres de préhension du produit P sur la bande transporteuse d'amenée 2 et/ou lors des manoeuvres de dépose du produit P sur les moyens supports 4, il peut être prévu d'appliquer des vitesses de cheminement différentes entre les parties P2 et P1 du produit P reposant respectivement sur, d'une part, la bande transporteuse d'amenée 2 ou les moyens supports 4 et, d'autre part, le plan de préhension 10d'.

Un tel différentiel de vitesse permet de créer un allongement, ou un raccourcissement, de produits P rétractables/extensibles dans le sens de la longueur.

Selon le différentiel de vitesse appliqué, cet ajustement provoque soit un étirement, soit une rétraction, de la longueur des produits P.

En pratique et par exemple, lors des manoeuvres de préhension du produit P sur la bande transporteuse d'amenée 2, la vitesse de cheminement du plan de préhension 10d' est supérieure, ou inférieure, à la vitesse de cheminement du plan de transport 2' pour assurer un étirement ou une rétraction, respectivement, du produit P.

De même, lors des manoeuvres de dépose du produit P sur les moyens supports 4, la vitesse de cheminement du plan de préhension 10d' est supérieure, ou inférieure, à la vitesse de translation de la bande préhenseur 10 pour assurer une rétraction ou un étirement, respectivement, du produit P.

A titre indicatif, pour une modification de longueur de tranches de viande, le différentiel de vitesse peut être compris entre 1% et 50%.

De manière générale, le procédé selon l'invention permet la manutention de produits, éventuellement fragiles et fins, tout en conservant leur intégrité de forme et de matière lors du transfert depuis la bande transporteuse d'amenée jusqu'aux moyens supports.

## Revendications

1. Procédé pour la manutention de produits du type denrées alimentaires, par la mise en oeuvre d'une installation de manutention comprenant :
- un convoyeur d'amenée (2), définissant un plan de transport (2') pour lesdits produits (P) et une direction d'avancement (A),
- des moyens de détection (3), pour la détection de la position desdits produits (P) sur ledit plan de transport (2'),
- des moyens supports (4), pour la réception desdits produits (P),
- des moyens préhenseurs (5), portés par des moyens de manoeuvre (6), pour assurer la préhension desdits produits (P) sur ledit plan de transport (2') et pour assurer leur dépose sur lesdits moyens supports (4), lesquels moyens préhenseurs (5) comportent une bande préhenseur (10), sans fin, qui s'enroule au niveau d'une première extrémité (10a), dite extrémité avant, autour d'un tambour d'extrémité avant (11), et au niveau d'une seconde extrémité (10b), dite extrémité arrière, autour d'un tambour d'extrémité arrière (12), le diamètre du tambour d'extrémité avant (11) étant inférieur au diamètre du tambour d'extrémité arrière (12), l'un au moins desdits tambours (12) étant associé à une motorisation (14) pilotée par des moyens de commande (7), laquelle bande préhenseur (10) comporte un brin supérieur (10d) présentant une face de dessus (10d') constituant un plan de préhension pour lesdits produits (P),
- des moyens (7) pour la commande desdits moyens de manoeuvre (6) et desdits moyens préhenseurs (5), à partir des informations fournies au moins par lesdits moyens de détection (3),
et le plan de préhension (10d') de la bande préhenseur (10) étant incliné par rapport à l'horizontale, selon une pente descendante depuis son extrémité arrière (10b) jusqu'à son extrémité avant (10a), en particulier lors des manoeuvres de préhension des produits (P) sur le convoyeur d'amenée (2), et de dépose de ce produit (P) sur les moyens supports (4)
caractérisé **en ce que** lesdits moyens de manoeuvre (6) sont aptes à assurer une manoeuvre desdits moyens préhenseurs (5) dans un espace tridimensionnel, entre deux positions :
- une position de préhension, dans laquelle ladite bande préhenseur (10) est positionnée en regard et au-dessus dudit convoyeur d'amenée (2), pour la préhension des produits (P), et
- une position de dépose, dans laquelle ladite bande préhenseur (10) est positionnée en regard et au-dessus desdits moyens supports (4), pour la dépose des produits (P),
**en ce que** ladite motorisation (14) des moyens préhenseurs (5) est apte à assurer la mise en rotation du tambour (12) associé dans les deux sens, pour permettre le cheminement du plan de préhension (10d') de la bande préhenseur (10) dans deux sens inverses de cheminement (R, S), en vue de la préhension et de la dépose des produits (P) par l'extrémité avant (10a) de ladite bande préhenseur (10),
et en ce que ledit procédé comprend une manoeuvre desdits moyens préhenseurs (5) entre lesdites deux positions :
a/ ladite position de préhension, dans laquelle :
a1/ ladite bande préhenseur (10) est positionnée en regard et au-dessus dudit convoyeur d'amenée (2), et
a2/ le plan de préhension (10d') de la bande préhenseur (10) chemine dans un sens de cheminement (R),
en vue de la préhension des produits (P) par l'extrémité avant (10a) de ladite bande préhenseur (10), et
b/ ladite position de dépose, dans laquelle :
b1/ ladite bande préhenseur (10) est positionnée en regard et au-dessus desdits moyens supports (4), et
b2/ le plan de préhension (10d') de la bande préhenseur (10) chemine dans un sens de cheminement (S) qui est inverse au sens de cheminement (R) de ladite position de préhension,
en vue de la dépose des produits (P) par l'extrémité avant (10a) de ladite bande préhenseur (10).

2. Procédé pour la manutention de produits du type denrées alimentaires, selon la revendication 1, **caractérisé en ce que** les moyens de manoeuvre (6) assurent une manoeuvre des moyens préhenseurs (5) selon :
- un axe de translation horizontal latéral, orienté perpendiculairement à la direction d'avancement (A) du convoyeur d'amenée (2),
- un axe de translation horizontal « amont - aval », orienté parallèlement à la direction d'avancement (A) du convoyeur d'amenée (2),
- un axe de translation orienté verticalement, pour un déplacement en hauteur des moyens préhenseurs 5 associés, notamment par rapport au plan de transport (2') du convoyeur d'amenée (2) et par rapport aux moyens supports (4), et
- un axe de rotation vertical, de sorte à contrôler les mouvements de pivotement de l'axe de cheminement (10') du convoyeur préhenseur (10).

3. Procédé pour la manutention de produits du type denrées alimentaires, selon l'une quelconque des revendications 1 ou 2, **caractérisé en ce que** les moyens de manoeuvre (6) consistent en un robot.

4. Procédé pour la manutention de produits du type denrées alimentaires, selon la revendication 3, **caractérisé en ce que** les moyens de manoeuvre (6) consistent en un robot à bras parallèles.

5. Procédé pour la manutention de produits du type denrées alimentaires, selon la revendication 4, **caractérisé en ce que** les moyens de manoeuvre (6) consistent en un bras robot, et encore de préférence en un robot dit « delta » dont l'organe de manipulation est formé de trois parallélogrammes déformables.

6. Procédé pour la manutention de produits du type denrées alimentaires, selon l'une quelconque des revendications 1 à 5, **caractérisé en ce que** ladite motorisation (14) des moyens préhenseurs (5) coopère avec des moyens capteurs de vitesse et de position qui sont raccordés avec les moyens de commande (7), pour contrôler le cheminement du plan de préhension (10d') de la bande préhenseur (10) et aussi du produit (P) lors de sa préhension et de sa dépose.

7. Procédé pour la manutention de produits du type denrées alimentaires, selon l'une quelconque des revendications 1 à 6, **caractérisé en ce que** ledit plan de préhension (10d') est incliné par rapport à l'horizontale, d'un angle compris entre 10° et 45° lors des manoeuvres de préhension des produits (P) sur le convoyeur d'amenée (2), et de dépose de ces produits (P) sur les moyens supports (4), afin d'assurer la stabilité desdits produits (P).

8. Procédé pour la manutention de produits du type denrées alimentaires, selon l'une quelconque des revendications 1 à 7, **caractérisé en ce que** le convoyeur d'amenée (2) comporte un tambour d'entrainement couplé à une motorisation munie de moyens capteurs de vitesse et de position qui sont raccordés aux moyens de commande (7).

9. Procédé pour la manutention de produits du type denrées alimentaires, selon l'une quelconque des revendications 1 à 8, **caractérisé en ce que** les moyens de détection (3) du positionnement des produits (P) sur le convoyeur d'amenée (2) consistent en des moyens d'acquisition d'image(s) (3), et **en ce que** les moyens de commande (7) comportent des moyens de traitement d'image(s) et des moyens de suivi d'objets, pour piloter les moyens préhenseurs (5) et les moyens de manoeuvre (6) associés.

10. Procédé pour la manutention de produits du type denrées alimentaires, selon l'une quelconque des revendications 1 à 9, **caractérisé en ce que** lesdits moyens supports (4) pour la réception des produits (P) consistent en des conditionnements (4).

11. Procédé pour la manutention de produits du type denrées alimentaires, selon l'une quelconque des revendications 1 à 10, **caractérisé en ce que** les moyens de commande (7) intègrent également des moyens pour ajuster au moins la vitesse de cheminement de la bande préhenseur (10) de manière à permettre, lors des manoeuvres de préhension du produit (P) sur le convoyeur d'amenée (2) et/ou lors des manoeuvres de dépose des produits (P) sur les moyens supports (4), l'application d'une différence de vitesse entre, d'une part, ledit convoyeur d'amenée (2) ou lesdits moyens supports (4), selon le cas, et d'autre part, le plan de préhension (10d') de la bande préhenseur (10), de manière à assurer une extension ou une rétraction de la longueur des produits (P).

12. Procédé pour la manutention de produits du type denrées alimentaires, selon l'une quelconque des revendications 1 à 11, pour la manutention de produits (P) rétractables/extensibles, du type tranches de viande ou de poisson, **caractérisé en ce qu'**il consiste, lors des manoeuvres de préhension dudit produit (P) sur ledit convoyeur d'amenée (2) et/ou lors des manoeuvres de dépose des produits (P) sur les moyens supports (4), à appliquer une différence de vitesse entre, d'une part, ledit convoyeur d'amenée (2) ou lesdits moyens supports (4), selon le cas, et d'autre part, le plan de préhension (10d') de la bande préhenseur (10), de manière à assurer une extension ou une rétraction de la longueur des produits (P).

## Patentansprüche

1. Verfahren zur Beförderung von Produkten vom Typ Lebensmittel durch Betreiben einer Förderanlage mit
- einem Zuführförderband (2), das eine Transportebene (2') für die besagten Produkte (P) und eine Vorwärtsförderrichtung (A) definiert,
- Erfassungsmitteln (3) zum Erfassen der Position der besagten Produkte (P) auf der Transportebene (2'),
- Ablagemitteln (4) zum in Empfang Nehmen der besagten Produkte (P),
- Greifmitteln (5), die von Betätigungsmitteln (6) gehalten sind, um das Ergreifen der besagten Produkte (P) auf der Transportebene (2') sicherzustellen und um deren Ablegen auf den besagten Ablagemitteln (4) sicherzustellen, wobei die Greifmittel (5) ein endloses Greifband (10) aufweisen, das an einem ersten Ende (10a), als vorderes Ende bezeichnet, um eine vordere Endrolle (11) und an einem zweiten Ende (10b), als hinteres Ende bezeichnet, um eine hintere Endrolle (12) geführt ist, wobei der Durchmesser der vorderen Endrolle (11) kleiner als der Durchmesser der hinteren Endrolle (12) ist, wobei wenigstens eine der beiden Endrollen (12) einer von Steuerungsmitteln (7) gesteuerten Antriebsquelle (14) zugeordnet ist, wobei das Greifband (10) ein oberes Trum (10d) mit einer Oberseite (10d') aufweist, die eine Aufgreifebene für die besagten Produkte (P) darstellt,
- Mitteln (7) zum Steuern der besagten Betätigungsmittel (6) und der besagten Greifmittel (5) auf der Grundlage der Informationen, die wenigstens von den besagten Erfassungsmitteln (3) bereitgestellt werden,
wobei die Aufgreifebene (10d') des Greifbands (10) gegenüber der Horizontalen mit einem Gefälle von seinem hinteren Ende (10b) zu seinem vorderen Ende (10a) hin, insbesondere während des Aufgreifens der Produkte (P) auf dem Zuführförderband (2) und während des Ablegens des Produkts (P) auf den Ablagemitteln (4), geneigt ist,
**dadurch gekennzeichnet**,
- dass die besagten Betätigungsmittel (6) dazu ausgelegt sind, ein Betätigen der besagten Greifmittel (5) in einem dreidimensionalen Raum zwischen zwei Positionen, und zwar
- einer Aufgreifposition, in der das besagte Greifband (10) zum Aufgreifen der Produkte (P) gegenüber und oberhalb des besagten Zuführförderbands (2) positioniert ist, und
- einer Ablegeposition, in der das Greifband (10) zum Ablegen der Produkte (P) gegenüber und oberhalb der besagten Ablagemittel (4) positioniert ist,
- dass die besagte Antriebsquelle (14) der Greifmittel (5) dazu ausgelegt ist, ein Drehen der zugeordneten Endrolle (12) in beiden Richtungen sicherzustellen, um eine Bewegung der Aufgreifebene (10d') des Greifbandes (10) in zwei umgekehrten Bewegungsrichtungen (R, S) zum Zwecke des Aufgreifens und des Ablegens der Produkte (P) durch das vordere Ende (10a) des besagten Greifbands (10) sicherzustellen, und
- dass das besagte Verfahren eine Betätigung der besagten Greifmittel (5) zwischen den beiden besagten Positionen, und zwar
a/ der Aufgreifposition, in der
a1/ das besagte Greifband (10) gegenüber und oberhalb des besagten Zuführförderbands (2) positioniert ist und
a2/ die Aufgreifebene (10d') des Greifbandes (10) sich in einer Bewegungsrichtung (R) bewegt,
im Hinblick auf das Aufgreifen der Produkte (P) durch das vordere Ende (10a) des besagten Greifbands (10), und
b/ der Ablegeposition, in der
b1/ das besagte Greifband (10) gegenüber und oberhalb der Ablagemittel (4) positioniert ist, und
b2/ die Aufgreifebene (10d') des Greifbandes (10) sich in einer Bewegungsrichtung (S) bewegt, die der Bewegungsrichtung (R) der besagten Aufgreifposition entgegen gerichtet ist,
im Hinblick auf das Ablegen der Produkte (P) durch das vordere Ende (10a) des besagten Greifbands (10).

2. Verfahren zum Befördern von Produkten vom Typ Lebensmittel gemäss Anspruch 1, **dadurch gekennzeichnet, dass** die Betätigungsmittel (6) eine Betätigung der Greifmittel (5) entlang
- einer seitlichen, horizontalen, zur Vorwärtsförderrichtung (A) des Zuführförderers (2) senkrechten Translationsachse,
- einer horizontalen, bewegungsstromaufwärts/-abwärts gerichteten, parallel zur Vorwärtsförderrichtung des Zuführförderers (2) gerichteten Translationsachse,
- einer senkrechten Translationsachse für eine Bewegung der zugehörigen Greifmittel (5) in der Höhe, insbesondere in Bezug auf die Transportebene (2') des Zuführförderers (2) und in Bezug auf die Ablagemittel (4), und
- einer senkrechten Drehachse, um die Schwenkbewegungen der Bewegungsachse (10') des Greifbandes (10) zu steuern, sicherstellen.

3. Verfahren zum Befördern von Produkten vom Typ Lebensmittel gemäss einem der Ansprüche 1 oder 2, **dadurch gekennzeichnet, dass** die Betätigungsmittel (6) aus einem Roboter bestehen.

4. Verfahren zum Befördern von Produkten vom Typ Lebensmittel gemäss Anspruch 3, **dadurch gekennzeichnet, dass** die Betätigungsmittel (6) aus einem Roboter mit parallelen Armen stehen.

5. Verfahren zum Befördern von Produkten vom Typ Lebensmittel gemäss Anspruch 4, **dadurch gekennzeichnet, dass** die Betätigungsmittel (6) aus einem Roboterarm bestehen, insbesondere aus einem sogenannten "Delta"-Roboter, dessen Betätigungsorgan aus drei verformbaren Parallelogrammen gebildet ist.

6. Verfahren zum Befördern von Produkten vom Typ Lebensmittel gemäss einem der Ansprüche 1 bis 5, **dadurch gekennzeichnet, dass** die besagte Antriebsquelle (14) der Greifmittel (5) mit Mitteln zum Erfassen der Geschwindigkeit und der Position zusammenwirkt, die mit den Steuermitteln (7) verbunden sind, um die Bewegung der Aufgreifebene (10d') des Greifbandes (10) und auch des Produkts (P), wenn es aufgegriffen und wenn es abgelegt wird, zu steuern.

7. Verfahren zum Befördern von Produkten vom Typ Lebensmittel gemäss einem der Ansprüche 1 bis 6, **dadurch gekennzeichnet, dass** die besagte Aufgreifebene (10d') beim Aufgreifen der Produkte (P) auf dem Zuführförderer (2) und beim Ablegen der Produkte (P) auf den Ablagemitteln (4) gegenüber der Horizontalen um einen Winkel zwischen 10° und 45° geneigt ist, um die Stabilität der besagten Produkte (P) sicherzustellen.

8. Verfahren zum Befördern von Produkten vom Typ Lebensmittel gemäss einem der Ansprüche 1 bis 7, **dadurch gekennzeichnet, dass** der Zuführförderer (2) eine an eine mit Mitteln zum Erfassen der Geschwindigkeit und der Position, die mit den Steuermitteln (7) verbunden sind, versehene Antriebsquelle gekoppelte Antriebsrolle aufweist.

9. Verfahren zum Befördern von Produkten vom Typ Lebensmittel gemäss einem der Ansprüche 1 bis 8, **dadurch gekennzeichnet, dass** die Mittel (3) zum Erfassen der Position der Produkte (P) auf dem Zuführförderer (2) aus Bildaufnahmemitteln (3) bestehen und dass die Steuermittel (7) Bildverarbeitungsmittel und Verfolgungsmittel aufweisen, um die Greifmittel (5) und die zugehörigen Betätigungsmittel (6) zu steuern.

10. Verfahren zum Befördern von Produkten vom Typ Lebensmittel gemäss einem der Ansprüche 1 bis 9, **dadurch gekennzeichnet, dass** die besagten Ablagemittel (4) zum in Empfang Nehmen der Produkte (P) aus Verpackungen bestehen.

11. Verfahren zum Befördern von Produkten vom Typ Lebensmittel gemäss einem der Ansprüche 1 bis 10, **dadurch gekennzeichnet, dass** die Steuermittel auch Mittel zum Einstellen von wenigsten der Bewegungsgeschwindigkeit des Greifbandes (10) aufweisen, um während des Aufgreifens des Produkts (P) auf dem Zuführförderer (2) und/oder des Ablegens der Produkte (P) auf den Ablagemitteln (4) einen Geschwindigkeitsunterschied zwischen dem besagten Zuführförderer (2) oder, je nach Fall, den Ablagemitteln (4) einerseits und der Aufgreifebene (10d') des Greifbandes (10) andererseits anwenden können, um eine Vergrösserung oder eine Verkürzung der Länge der Produkte (P) sicherzustellen.

12. Verfahren zum Befördern von Produkten vom Typ Lebensmittel gemäss einem der Ansprüche 1 bis 11, zum Befördern von zusammenziehbaren/ausdehnbaren Produkten (P), vom Typ Fleischscheiben oder Fischscheiben, **dadurch gekennzeichnet, dass** es beim Aufgreifen des Produkts (P) auf dem besagten Zuführförderer (2) und/oder beim Ablegen der Produkte (P) auf den Ablagemitteln (4) darin besteht, einen Geschwindigkeitsunterschied zwischen dem besagten Zuführförderer (2) oder, je nach Fall, den Ablagemitteln (4) einerseits und der Aufgreifebene (10d') des Greifbandes (10) andererseits anwenden können, um eine Vergrösserung oder eine Kürzung der Länge der Produkte (P) sicherzustellen.

## Claims

1. Method of handling products, such as food, by operating a handling installation comprising
- a feeding conveyor (2), defining a transportation plane (2') for said products (P) and a forward direction (A),
- sensor means (3) for detecting the position of said products (P) on said transportation plane (2'),
- support means (4) for receiving said products (P),
- pickup means (5) carried by handling means (6) for picking up said products (P) on the transportation plane (2') and for laying them down on said support means (4), said pickup means (5) comprising an endless pickup belt (10) running at a first end (10a), called the front end, around a front end drum (11), and at a second end (10b), called the rear end, around a rear end drum (12), the diameter of the front end drum (11) being smaller than the diameter of the rear end drum (12), at least one of said drums (12) being associated to drive means (14) controlled by control means (7), said pickup belt (10) comprising an upper strand (10d) having an upper face (10d') forming a pickup plane for said products (P),
- means (7) for controlling said handling means (6) and said pickup means (5) basing on information provided at least by said sensor means (3),
the pickup plane (10d') of the pickup belt (10) being tilted with respect to the horizontal plane as a slanted plane going down from its rear end (10b) to its front end (10a), especially during pickup of the products (P) on the feeding conveyor (2) and during laying down said product (P) on the support means (4),
**characterised in that** said handling means (6) is arranged as to implement handling said pickup means (5) in a three-dimensional space between two positions:
- a pickup position in which said pickup belt (10) is positioned in front of and above said feeding conveyor (2) for picking up products (P), and
- a laying-down position in which said pickup belt (10) is positioned in front of and above said support means (4) for laying down the products (P),
in that said drive means (14) of the pickup means (5) is arranged as to implement rotation of the associated drum (12) in both directions for allowing the movement of the pickup plane (10d') of the pickup belt (10) in two opposite directions (R, S), for picking up and laying down said products (P) by the front end (10a) of said pickup belt (10), and
in that said method comprises a movement of said pickup means (5) between said two positions:
a/ said pickup position in which
a1/ said pickup belt (10) is positioned in front of and above said feeding conveyor (2), and
a2/ the pickup plane (10d') of the pickup belt (10) moves in one direction (R),
in order to pick up the products (P) by the front end (10a) of said pickup belt (10), and
b/ said laying down position in which
b1/ said pickup belt (10) is positioned in front of and above said support means (4), and
b2/ the pickup plane (10d') of the pickup belt (10) moves in a direction (S) which is the opposite to the direction (R) of the movement of said pickup position,
in order to lay down the products (P) by the front end (10a) of the pickup belt (10).

2. Method of handling products such as food according to claim 1, **characterised in that** the handling means (6) implements a movement of the pickup means (5) along
- a horizontal lateral axis of translational movement oriented perpendicular to the forward direction (A) of the feeding conveyor (2),
- a horizontal "upstream - downstream" axis of translational movement oriented parallel to the forward direction (A) of the feeding conveyor (2),
- an axis of translational movement oriented vertically for an up and down movement of the associated pickup means (5), especially with respect to the transportation plane (2') of the feeding conveyor (2) and with respect to the support means (4), and
- a vertical rotational axis for controlling pivoting of the movement axis (10') of the pickup conveyor (10).

3. Method of handling products such as food according to any of claims 1 or 2, **characterised in that** the handling means (6) consists of a robot.

4. Method of handling products such as food according to claim 3, **characterised in that** the handling means consists of a robot having parallel arms.

5. Method of handling products such as food according to claim 4, **characterised in that** the handling means (6) consists of a robot arm, and in a preferred manner of a "delta" robot whose handling device is formed of three deformable parallelograms.

6. Method of handling products such as food according to any of claims 1 to 5, **characterised in that** said drive means (14) of the pickup means (5) cooperates with means for sensing speed and position which is connected to the control means (7) for controlling the movement of the pickup plane (10d') of the pickup belt (10) as well as of the product (P) when it is picked up and laid down.

7. Method of handling products such as food according to any of claims 1 to 6, **characterised in that** said pickup plane (10d') is tilted with respect to the horizontal plane by an angle between 10° and 45° during actions of picking up said products (P) on the feeding conveyor (2), and of laying down these products (P) on the support means (4), in order to insure the stability of said products (P).

8. Method of handling products such as food according to any of claims 1 to 7, **characterised in that** the feeding conveyor (2) comprises a driving drum coupled to drive means provided with means for sensing speed and position which are connected to the control means (7).

9. Method of handling products such as food according to any of claims 1 to 8, **characterised in that** the means (3) for sensing the position of the products (P) on the feeding conveyor (2) consists of picture sensing means (3), and **in that** the control means (7) comprises means for treating a picture or pictures and means for following objects, in order to control the pickup means (5) and the associated handling means (6).

10. Method of handling products such as food according to any of claims 1 to 9, **characterised in that** the support means (4) for receiving the products (P) consists of packages (4).

11. Method of handling products such as food according to any of claims 1 to 10, **characterised in that** the control means (7) also comprises means for adjusting at least the speed of the movement of the pickup belt (10) in order to allow, during actions of picking up the product (P) on the feeding conveyor (2) and/or during actions of laying down the products (P) on the support means (4), for applying a speed difference between the feeding conveyor (2) or, according to the situation, the support means (4), on the one hand, and the pickup plane (10d') of the pickup belt (10), on the other hand, in order to allow for extending or reducing the length of the products (P).

12. Method of handling products such as food according to any of claims 1 to 11, for handling retractable/extendible products (P), such as slices of meat or fish, **characterised in that** it consists in applying, during actions of picking up the product (P) on the feeding conveyor (2) and/or during actions of laying down the products (P) on the support means (4), a speed difference between the feeding conveyor (2) or, according to the situation, the support means (4), on the one hand, and the pickup plane (10d') of the pickup belt (10), on the other hand, in order to allow for extending or reducing the length of the products (P)..
